Europäisches Patentamt

European Patent Office

Office européen des brevets

(19)

(11) Publication number: **0 132 862**
**B1**

(12)                    **EUROPEAN PATENT SPECIFICATION**

(45) Date of publication of patent specification: **11.11.87**

(21) Application number: **84200872.4**

(22) Date of filing: **15.06.84**

(51) Int. Cl.⁴: **B 65 B 25/06**, B 65 C 3/12, B 65 C 1/04, B 65 B 11/04

(54) **A device for identification of cheese by applying printed matter.**

(30) Priority: **17.06.83 NL 8302173**

(43) Date of publication of application:
**13.02.85 Bulletin 85/07**

(45) Publication of the grant of the patent:
**11.11.87 Bulletin 87/46**

(84) Designated Contracting States:
**AT BE CH DE FR GB IT LI LU NL SE**

(56) References cited:
**EP-A-0 063 845**
**NL-A-8 104 798**
**US-A-3 273 301**

(73) Proprietor: **Tekon Holding B.V.**
**Auke Vleerstraat 8**
**NL-7521 PG Enschede (NL)**

(72) Inventor: **Ordelmans, Hermanus Johannes Bernardus**
**Kolenbranderweg 32**
**NL-7582 Haaksbergen (NL)**

(74) Representative: **van der Beek, George Frans et al**
**Nederlandsch Octrooibureau Johan de Wittlaan 15 P.O. Box 29720**
**NL-2502 LS 's-Gravenhage (NL)**

Courier Press, Leamington Spa, England.

## Description

The invention relates to a device for identification of cheese by applying printed matter onto the cheese in one movement run, comprising a banderole section having a conveyor for causing the cheese to rotate and a banderole supply device for supplying a banderole to the circumference of the rotating cheese. Such a device is known from Netherlands patent application NL 8104798.

In the device from this Netherlands patent application a cheese being in lying horizontal position is provided with printed matter, such as a banderole. Such a device which is quite large, is generally taken up in an automatic handling line in which large numbers of cheese are handled with high speed, such implying construction requirements which result in rather expensive devices. Such devices do not pay in firms handling smaller numbers of cheeses. In these cases the cheeses are usually provided manually with the printed matter. When handling these smaller numbers of cheeses the attendant who applies the printed matter has to go to the cheeses while taking the required means along instead of conveying the cheeses to the handling station as is required in the large and known device in view of the size and construction thereof and which leads to planning and other conveyance problems. Certainly the latter is of importance if the gangways between the cheese storage racks are relatively narrow, as is the case nearly always, and have a width of only about 90 cm for instance. Furthermore, in the known devices one cannot use cheese plastic or a thinned down mixture thereof as an adhesive due to the high degree of fouling resulting from it.

The invention aims to obviate above problems and to provide a device by means of which cheese is identified by applying printed matter between and at the cheese storage racks in such a manner that the device can be operated by one attendant only. Moreover, the device should both be applicable in a limited narrow space as well as relatively low-priced, while the handling capacity of the device should be in the range of from 300 to 700 cheeses per hour.

According to the invention this aim is achieved in a device of the type mentioned in the preamble such that the device is provided with a cheese engaging means for engaging the cheese in upright position in its centre portion at least on one side and that the conveyor cooperates with the cheese engaging means such that the cheese during its rotation in a vertical plane around its substantially stationary central axis is wrapped with the banderole.

In an advantageous embodiment of this device, in which the banderole section is provided with a driving means for the banderole supply device and the conveyor which comprises a drive belt, the improvement is such that the drive belt also functions as a cheese support surface and is adapted to be driven in a direction opposite to the cheese track direction, and that the cheese engaging means comprise a rotatable suction cup, the height of which is adjustable, and a vacuum source coupled to the suction cup such that after the cheese is introduced vacuum is brought about in the suction cup.

Said drive belt can be constructed such that it is slightly sloping downward from the inlet side to the outlet side thereby permitting a cheese to roll on its own accord to the outlet side once the wrapping action is ended.

In this compact embodiment according to the invention, in which the upright cheese rotating around its substantially stationary central axis is wrapped with printed material, this device can be used in a simple way by an attendant in the narrow gangways between the cheese storage racks. As present device is embodied such that it is both relatively short as well as relatively narrow it can easily be handled by one person such that the operation speed will be adapted thereto thus permitting lower requirements as to the construction of the device on the one hand and a visual control of its operation and human intervention in case of failure on the other hand. Accordingly it becomes possible to construct the device in a simpler and cheaper manner. In order to increase its handling capacity this small device can easily be mounted on a movable carrier.

In a further embodiment according to the invention the device is provided with a substantially U-shaped cheese reversal track following the banderole wrapping section for bringing the cheese from its upright position into a horizontal position, and a labelling section following the cheese reversal track in which the cheese is provided with a label. By mounting the wrapping and labelling sections side by side and connecting the same by means of a U-shaped cheese reversal track a cheese may be supplied to the device and be removed therefrom by one attendant only, without said attendant being forced to walk from one position to another and/or along the device. Starting from the known device in a handling line, positioning the wrapping and labelling sections behind each other would lead to a device having a length far too great. Starting from the known device for handling cheeses in horizontal position, mounting the wrapping section and the labelling section side by side and connecting the same via a U-shaped cheese reversal track would lead to a width in the order of 100 cm and more. This would render the introduction of the device between the cheese racks and moving it therebetween impossible in most cases. Where the cheese is wrapped in upright position and the cheese via a U-shaped cheese reversal track is brought in horizontal position into the labelling section a device is obtained having a width of about 70 cm and a length of about 180 cm such that said device also in relatively small gangways can easily be handled and has a small turning circle.

The application of printed matter, such as the banderole and the label, occurs in a completely automatic way. Plasticizer can be applied in the cheese reversal track to the cheese if required. The label may then be pressed into the fresh plastic coating whereby an additional adhesive applying means may be omitted. If the application of an additional plastic coating is not wanted a slide may suffice as the cheese reversal track. In that case the labelling section has to be provided with an adhesive applying means.

Contrary to the heavy material employed in the known devices the material for the identification of cheese used in present device may be an extremely thin and weak band material, the tensile strength of which in wet condition is low. As the printed banderole material is in the form of a continuous strip during its conveyance for the wrapping action, the forepart of the material is supported by the supporting surface of the drive belt which during operation becomes slightly moistened and a reliable hold of the forepart of the strip in flat condition is provided for. Severing the strip of printed material only occurs thereby at the last moment, i.e. at the moment the cheese has been wrapped completely. In driving the supply roll of the banderole strip at the same peripheral speed as the speed of the drive belt it is warranted that the strip in its non-supported path is not tensioned and is supplied substantially tensionless thus guaranteeing that the strip in an optimal manner remains intact.

The adhesive, for instance a cheese plastic mixture, is applied to the strip at a late stage which offers advantages with respect to both the fouling of the device as well as the severing of the moistened strip. In order to prevent fouling as much as possible it is preferred that a scraper operating with the drive belt outside the drive region is provided. Due to the resulting fouling, such a cheese plastic or thinned down mixture thereof cannot be used in the known device in which potato starch thinned down with water is used.

In order to saveguard the non supported portion further against moistening + and consequently against loss of tensile strength + there may be provided two band guides such that the banderole strip is guided substantially tensionless from the supply roll to the first band guide, from the latter downward to the second band guide and from said second band guide upward to the drive belt whereby a trickle edge is created for the free span of the strip in the direction of the supply roll. In order to obtain an equal speed at the circumference of the supply roll and of the drive bend there is provided a driven rubber roll near the supply roll such that in operation the supply roll is pressed under weight action in the direction of the rubber roll.

In the labelling section drive means are provided for the label seizing and conveying means which are coupled to the drive means for the cheese conveyor means, whereby said label seizing and conveying mens comprising a drive roller with a friction surface places the label, already lowered in the starting position in a preceding step, onto the top surface of the cheese in a flowing motion and then seizes the first available label and brings the same in the lower starting position for the next cheese. Advantageously a measuring wheel emitting timing pulses can be used for the timing control of the drive roller.

A simple adaptation of the labelling section to cheeses of a different thickness is obtained by including at least two support roles in the region beneath the conveyance surface of the cheese in a frame, the height of which can be adjusted dependent on the cheese thickness. At the cheese inlet side of the labelling section then there is provided a measuring means to detect the height or thickness of each separate horizontally introduced cheese where upon an adjusting means adjusts the said frame in response to the thickness measurement.

A labelling device is known from the Netherlands patent application NL—8200188 for handling, according to a handling line principle, large numbers of cheeses and to provide each cheese with a label. Said known device is relatively large and expensive. The present device in contradistinction thereto is relatively compact and cheap. In the known device the seizing action of a label from the label holder and the deposition of said label onto a cheese is realized each time separately for each cheese. In present labelling section, however, immediately after the deposition of a label on a cheese in preparation to the handling of the next cheese the then available label is seized from the label holder, said operation being controlled by the timing pulses from a measuring wheel.

Furthermore the device of the invention is provided with a control panel by means of which different selection programs may be set into operation. For round cheeses for example the following treatments may be set into operation:
1. wrapping + plasticizing + labelling.
2. wrapping + plasticizing.
3. wrapping + labelling.
4. wrapping.
5. plasticizing + labelling.
6. plasticizing.
7. labelling.

The device may also be used for treating square cheeses which may then be plasticized and labelled or labelled only. In these cases the wrapping section is only used for conveying the square cheeses. The severing means and the adhesive applying means have then been removed or retracted and the drive belt is now driven in the cheese track direction. The supply of the banderole strip is then omitted.

With reference to an exemplary embodiment schematically shown in the drawings the device of the invention will now be explained further. Therein:

Figure 1 shows the device in plan view;

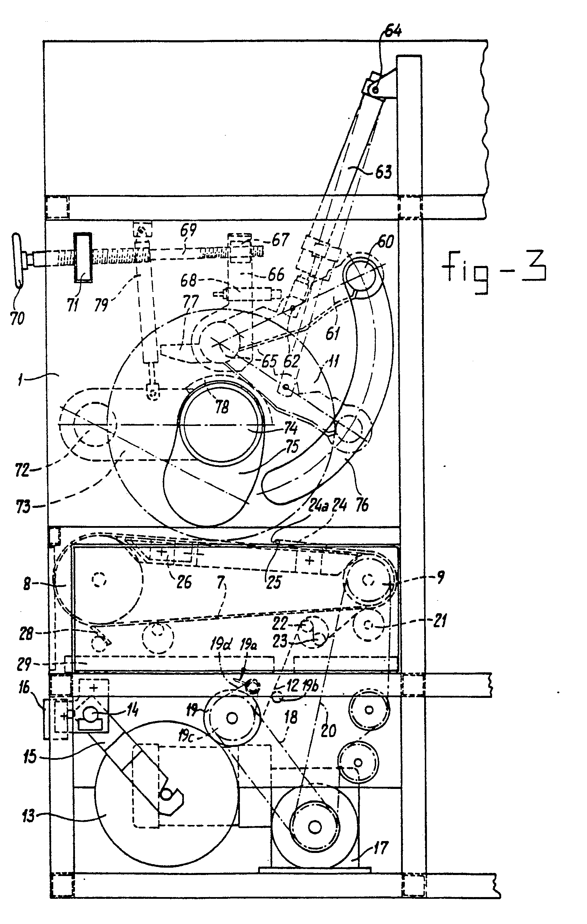

Figure 2 shows a front elevation of the device;

Figure 3 shows the wrapping section in right hand side elevation of the device of Figs. 1 and 2;

Figure 4 shows the labelling section in left hand side elevation of the device of Figs. 1 and 2.

The device shown in the drawings includes a banderole section 1, a reversal track or guiding section 2 and a labelling section 3. The banderole section 1 and the labelling section 3 are placed side by side on a carriage part 4 and the reversal track section 2 is placed on a carriage part 5. On these carriage parts the said sections are combined to a compact unit having a width of about 70 cm and a length of about 180 cm. This compact device can be used in an appropriate manner in the relatively narrow gangways in the cheese storehouse. Optionally both carriage parts can also be connected to one another by means of detachable hinges 6 whereby upon detaching the hinges on one side the carriage parts 4 and 5 may be swiveled with respect to each other so that the whole may be handled well also in rather narrow and sharp bends.

The wrapping section represented in side elevation in Fig. 3 includes an endless drive belt running around a reversing idler roll 8 and a reversing roll 9 capable of being driven. Of the two rolls the roll 9 is of a somewhat smaller diameter or is positioned somewhat lower than the roll 8 so that the drive belt slopes downward in the direction of the reversal track section 2. Sideways above the conveyor belt 7 adjustable cheese guides 10 have been provided for guiding a cheese 11 in its vertical position. A banderole strip 12 supplied from a supply roll 13 lies on the drive belt 7 in the longitudinal direction thereof. The said supply roll 13 is pressed against a rubber roller 19 by means of an arm 15 mounted hingedly on a fixed shaft 14 under the action of a weight 16. A motor 17 drives the rubber roller 19 and the driving roll 9 by way of a transmission means 18 and a transmission means 20, respectively, in such a manner that the speed of the drive belt equals the peripheral speed of the roller 19. At the location of the reversing roll 9 the drive belt cooperates with an idling pressing roller 21 between which pressing roller and the drive belt 7 the banderole strip is supplied by way of the band guides 22, 23. Of these rollers the guide 22 is positioned at the left hand side above the guide 23. The supply of the banderole strip as described above is implemented such that an almost tensionless supply of banderole material of very low weight, for instance 12+20 g/m$^2$, is achieved.

A stainless steel plate 24 extends above the drive belt 7 at spaced relation. This plate 24 is mounted in not shown guides enabling the front edge of the plate to be moved to-and-fro parallel to the drive belt 7 in the direction of the roll 8 and then to secure the same subsequently. The front edge of the plate 24 is inclined to the drive belt 7, forming a severing edge 24a thereat and having a plurality of cutting points. In this manner this edge encloses a plurality of angles deviating from 90° with respect to the longitudinal direction of the drive belt. Beneath the plate 24 and above the drive belt 7, close to the edge 24a, an adhesive applicator 25 is provided by means of which a glue or an adhesive, like potato starch or a cheese plastic mixture, can be applied onto the strip 12 lying on the drive belt 7. Beneath the drive belt and close to the reversing roll 8 an air chamber 26 is provided by means of which an upward air surge can be delivered to the banderole strip 12 via of a row of perforations 27 provided in the drive belt 7. At the lower side of the drive 7 a scraper 28 is provided in contact with said belt 7 in order to scrape any remaining adhesive therefrom. Below the entire drive belt a receiving vessel 29 is provided for receiving adhesive dripping down and preventing in this way fouling of the machine parts present therebelow.

In a variant, instead of using the plate 24 and its severing edge, another means is used to sever the banderole strip. In this variant the banderole strip has the same course through the wrapping section 1. However, a perforation cam 19a rotating along via 19d with roller 19, is placed between said roller 19 and the guides 22, 23. A nylon roller 19b being provided with grooves, which correspond with the perforation cam 19a, is positioned opposite said cam 19a. The portion 19c on the rotating shaft of roller 19 constitutes a twofold brake-coupling combination which — independently — starting from the motor 17 can drive both the roller 19 as well as the perforation cam 19a. It is now possible to define, for each cheese, on the banderole strip a banderole of certain length by effecting a perforation impairment in the strip. When wrapping a cheese the brake-coupling combination 19c is switched in for the perforation cam 19a by means of a set value in the control panel, and this cam makes one revolution and then stops again. When the perforation impairment then arrives at roll 9 the drive of rubber roller 19 is stopped while the cheese rotates further. Owing to this the banderole strip is severed at the location of the impairment.

Above and sideways of the conveyor belt a suction cup 74 to be placed against the centre of a vertically positioned cheese is provided, said suction cup being fastened to a lever 73, which is rotably mounted on a fixed pivot 72 and being adjustable sideways about its own pivot. The suction cup 74 is coupled to a vacuum source not shown. The lever 73 is suspended in a balanced manner by means of an air cylinder 79. A lever 66 approximately vertically extending from a fixed pivot 65 is provided above the suction cup 74. In the upper end portion of the lever 66 there is provided a turnable threaded nut 67 fastened to a threaded rod 69 which can be rotated by means of a hand wheel via a fastening block 71. By rotating the hand wheel 70 the lever 66 may be swiveled to-and-fro about the pivot 65 whereby the stop 68 fastened to the lever 66 acquires a predetermined position.

A rod 61 running to the right hand side is connected to the pivot 65, said rod by way of a rotatable fastening point 62 is coupled to a compressed air cylinder 63, the latter being fastened to a fastening point 64 of the frame. The other end of the rod 61 is provided with a stop 60 which upon pneumatic operation of the compressed air cylinder is moved downward within a banana shaped slot 76 to the correct height for arresting the introduced cheese. Also fastened to the rod 61 there is provided a pin 77 extending to the left, said pin moving upward upon rotating the rod 61, the displacement thereof and consequently the movement of the rod 61 being stopped by an oil damper 68 fastened to the lever 66. Thereby the downward movement of the stop 60 is stopped at a position controlled by the hand wheel 70 and corresponding to the height of the suction cup. The suction cup is adjusted for that matter as follows. The plastic guide 78 fastened to the lever 73 is urged more or less downward by the lower side of the rod 61 when this rod moves, so that the suction cup 74 at its centre is adjusted in the slot 75 at the height of the middle of the introduced upright positioned cheese.

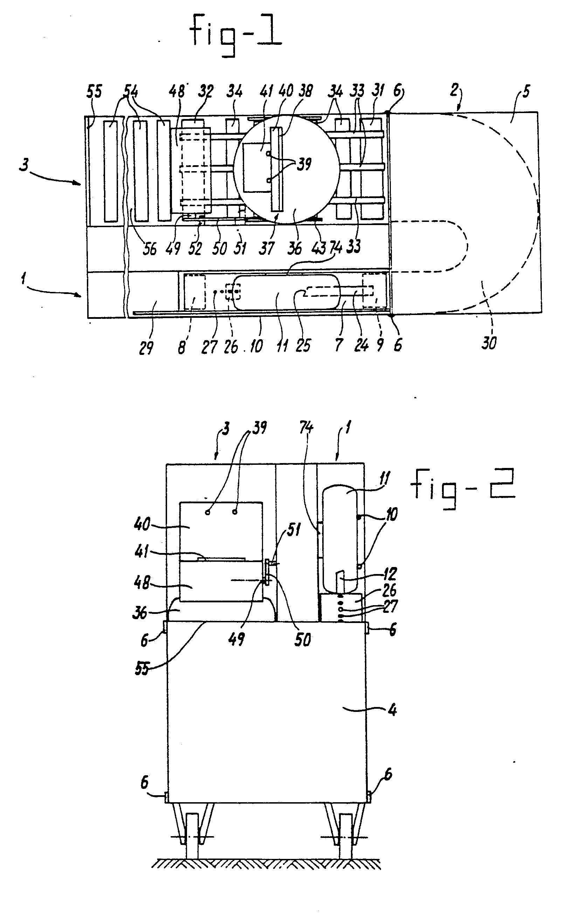

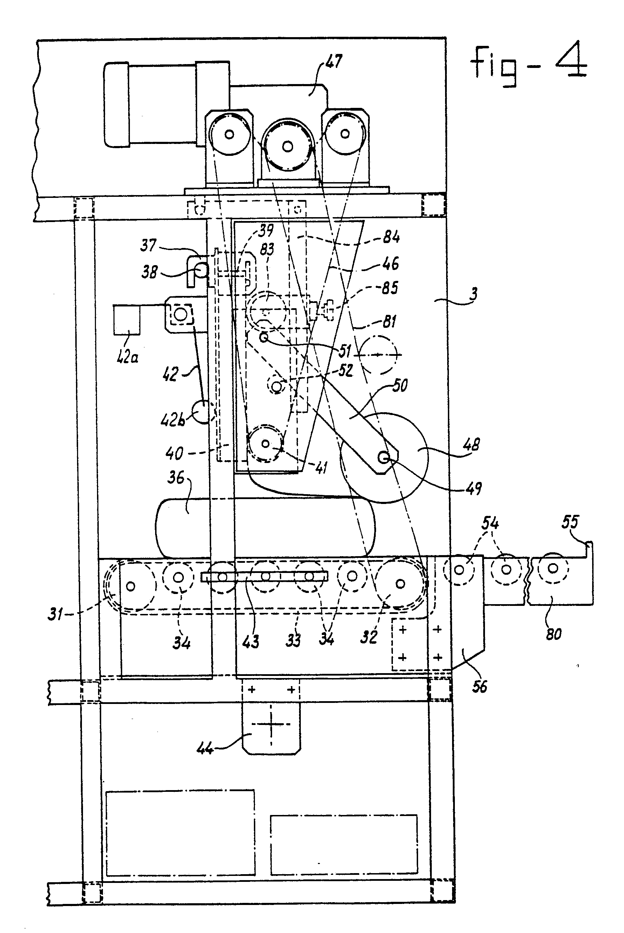

The reversal track section 2 is provided with a guide trajectory 30 schematically indicated in Fig. 1 forcing the cheese to describe an U-shaped bend thus bringing the cheese from its upright position into a horizontal position. The conveyance within the reversal track section 2 may be brought about with the aid of conveyance means provided therein and/or under the force of gravity. The cheese is discharged in its horizontal position to the labelling section 3 represented in Fig. 4 in a side elevation.

The labelling section 3 is provided with an idling reversing roll 31 and a reversing roll 32 capable of being driven. Three or more elastic bands 33 run around these rolls 31 en 32. The top portion of these bands 33 runs over support rolls 34 between the reversing rolls 31 en 32 thus creating an conveying surface for a cheese 36. Above this cheese conveying surface a label holder 37 is supported hingedly on a shaft 38 transverse to the conveying direction. The label holder 37 is provided with a metal clip 39 having two pins for seizing a vertically inserted pile of labels 40 which each have two perforations therein. A roller 41 capable of being driven engages the first available label of the pile of labels 40. The label holder 37 is urged into the direction of the roller 41 by means of a lever 42 having a weight 42a and a plastic roll 42b. The design is such that labels of very thin and light paper material, like rice paper having a weight of 12 g/m$^2$, may be used.

In order to adapt the distance between the label holder and the cheese conveying surface to cheeses of a different thickness some of the support rolls 34 have been included in a frame 43 which can being displaced in vertical direction either manually or by means of a spindle motor 44. Likewise a measuring means, like a series of photocells, may be provided, viewed in the track direction, at the inlet side of the labelling section for detecting the height of each one of the introduced cheeses separately. In response to the detection signal thereof an adjusting motor may automatically adjust the height of the frame 43. When moving the support rolls 34 upward the increase of the trajectory for the bands 33 will be compensated by the elastic elongation thereof. For a proper operation the top surface of the cheese lies about 10 mm below the first available label of the pile brought into the starting position.

A motor 47 drives the roll 32 via a transmission means 81 and the roller 41 via a transmission means 46. Care is taken thereby that upon driving the peripheral speed of the roll 32 and of the roller 41 are the same.

Furthermore the labelling section 3 is also provided with a pressing roller 48 which in a freely rotable manner around the shaft 49 is fastened to the end of the arm 50 which on its turn is rotably mounted around a fixed shaft 51. The movement of the arm 50 in downward direction is limited by a stop 52. This stop is positioned such that the circumferential surface of the pressing roll may come to a short distance below the top surface of the cheese 36. The stop 52 may be adjusted for adaptation to different heights of cheeses. The pression force of the roller 48, which is provided with an elastic foam coating, may be adjusted by means of a weight which may be moved along the arm 50 and fastened thereon.

Downstream of the reversing roll 32, when viewed in the track direction, and projecting outside the labelling section 3 proper a number of freely rotatable support rolls 54 is mounted in a frame 80. The cheese 36 may remain on these rolls until it is removed from the labelling section. Beyond the last support roll 54 an elevated support roll or a front edge 55 is provided, the upper edge of which is somewhat higher than the cheese supporting surface formed by the support rolls 54 in order to prevent a cheese 36 from moving beyond the rolls as a result of its own mass enertia. The frame 80 is designed foldably in upward direction for the benefit of an easier handling when turning the device at the end of the gangways.

Furthermore a receiving vessel is positioned below the bands 33 and the support rolls 54 in order to prevent fouling of the part of the device present therebelow.

The operation of the device described above for applying printed paper, i.e. the banderole and the label, to the cheese is as follows:

First of all the threaded spindle 69 is turned by means of the hand wheel 70 such that by means of the turnable threaded nut 67 the lever 66 is swiveled until via the rod 71 the plastic guide 78 has positioned the suction cup 74 by means of the rod 71 at the correct height for the cheeses above the drive belt. Thereby the pin 77 has acquired a certain position whereby, upon pneumatich actuation of the compressed air cylinder 63, the rod 61 is rotated over an angle till the pin 77 abuts the stop 68 and the stop 60 has reached thereby the same height as the suction cup 74.

The attendant takes a cheese from a storage rack and places it vertically in the banderole section on the drive belt and against the suction cup and the stop. This stop is, like disclosed above, movable within the banana-shaped slot 76 and adjustable to a height of from 25 to 40 cm. In the operating position the stop is at the same height as the centre of the suction cup. When the cheese has come to rest against the stop 60 it presses a signal emitter whereby a vacuum is drawn in the suction cup. The vacuum is measured in order to establish whether the pressure is sufficiently low. If sufficient the motor 17 is switched in by which the drive belt 7 is driven and the forepart of the banderole strip 12 is brought from the supply roll 13 via the band guides 22 and 23 and the pressing roller 21 into position on the drive belt 7. At the same time the stop 60 is lifted and as the drive belt is now in operation the cheese retained by the suction cup will start rotating. After the forepart of the banderole strip has come above the air chamber an air surface is delivered by the air chamber 26 through the perforations 27 in the drive belt. Thereby said forepart of the banderole strip is shot upward against the cheese. Then the cheese is wrapped with the adhesive coated banderole strip 12 which will adhere to the cheese 11 at the same time. The banderole strip is coated with adhesive by means of the adhesive applicator 25 which keeps supplying adhesive to the banderole strip also during wrapping. Upon the expiration of the time, determined for said wrapping and adjusted in advance, air is supplied to the suction cup so that it will be released and the driving is stopped. Thereafter the cheese rolls on its own accord over the downward sloping drive belt in the direction of the reversal track section 2.

During this rolling motion the cheese passes some slightly ascending cutting points of the severing edge 24a of the plate 24 running obliquely with respect to the conveyance direction. The cheese rolls upward and consequently some tension comes about in the banderole strip whereby the same is severed. In the earlier mentioned variant, in which the plate and its severing edge are omitted, the severing of the banderole strip is brought about at the perforation impairment effected before.

The rolling cheese entering the reversal track section or plasticizing section 2 is detected resulting in the emission of a control signal. Thereby the compressed air cylinder 63 is actuated pneumatically whereby the stop 60 is lowered. Hereafter the next cheese may be introduced and the entire operation may be repeated.

In the reversal track section 2 the cheese is brought from its upright or vertical position to a horizontal position by means of the guide trajectory 30 which may be designed as a slide. Thereby the cheese follows an U-bend then being aligned with the labelling section 3.

The cheese discharged from the reversal track section 2 is conveyed into the labelling section 3 by means of the bands 33. Before the cheese 36 is passed below the label holder 37 operation of the roller 41 has warranted that the first available label from the pile is moved downward so that the forepart thereof is suspended freely below the label holder. The label is kept in this position by switching off the drive of the roller 41.

If no plasticizer has been applied to the cheese in the reversal track section 2 an adhesive layer will yet have to be applied to the top side of the cheese by means of an adhesive applicator. This applicator may be positioned below the label holder for instance and be controlled such that adhesive is applied to the label during the drive of the roller 41.

A cheese conveyed by the bands 33 will contact the suspended end of the label. Upon further conveyance of the cheese 36 the front edge of the label will slide along the front face of the cheese until the front edge rests on the top side of the cheese and the position shown in Fig. 4 is reached. At that time the drive of the roller 41 is switched in again. The detection of this position may be done by means of a detector means. Where peripheral speed of the rollers 32 and 41 are the same the label will be put down in a flowing motion upon driving the roller 41 and further conveyance of the cheese 36. When the hindpart of the label is out of contact with the roller 41 the latter is yet driven for a certain time causing the next label to be released from the label holder and to be positioned in its starting position for the application onto the next cheese to be supplied. For the timing control of this drive a measuring wheel 83 is used which rests against the pile of labels and is fastened to a support 84 the height of which may be adjusted by means of a knob 85. When the first available label slides down this measuring wheel turns along and emits time pulses. This operation is such that the rotation of the measuring wheel and consequently the pulse emission is stopped when the roller 41 seizes the label available in the starting position for the application onto the cheese; the rotation of the measuring wheel and consequently the pulse emission being resumed when the roller 41 tears the next label out of the suspension pins displacing the same to the starting position. The pulse emission determines thereby the magnitude of the movement of this next label.

Upon passing the roller 48 the label placed onto the cheese 36 is then finally pressed onto the cheese. In the starting position the lowermost point of the roller 48 is located at a short distance below the top surface of the cheese 36 this being controlled by the stop 52. When the cheese 36 passes along the roller 48 the latter will be lifted and will then start rolling over the top surface of the cheese while removing any air bubbles.

When the cheese has passed the roller 48 the cheese will arrive at the support rolls 54 and will come to rest on these rolls after having been stopped against the front edge 55. The cheese may then be removed from the device and be stored again in the cheese storage rack.

It is obvious that modifications and variations are possible within the scope of the invention. It is of importance that the cheese is wrapped in upright position in a very compact wrapping section and is supplied in horizontal position to the labelling section by way of a U-shaped guiding section and labelled in the labelling section.

The drive of the described conveyance and printed matter transportation means may be designed such that the speed in the wrapping section is adjusted at 16 m/min. and the speed in the plasticizing/labelling section at 8 m/min. In this way about 430 cheeses having a weight of 12 kg or about 650 cheeses having a weight of 2,5 kg can be wrapped and labelled per hour.

## Claims

1. A device for identification of cheese by applying printed matter onto the cheese (11) in one movement run, comprising a banderole section (1) having a conveyor (7, 8, 9) for causing the cheese to rotate and a banderole supply device (19, 22, 23, 21) for supplying a banderole to the circumference of the rotating cheese, characterized in that the device is provided with a cheese engaging member (10, 74) for engaging the cheese (11) in upright position in its centre portion at least on one side, and that the conveyor (7, 8, 9) cooperates with the cheese engaging means such that the cheese during its rotation in a vertical plane around its substantially stationary central axis is wrapped with the banderole.

2. A device according to claim 1, in which the banderole section (1) is provided with a driving means (17) for the banderole supply device and the conveyor which comprises a drive belt (7), characterized in that the drive belt (7) also functions as a cheese support surface and is adapted to be driven in a direction opposite to the cheese track direction, and that the cheese engaging means comprise a rotatable suction cup (74), the height of which is adjustable, and a vacuum source coupled to the suction cup such that after the cheese is introduced vacuum is brought about in the suction cup.

3. A device according to claim 2, in which the banderole section (1) is further provided with an air surge chamber (26) near the drive belt which includes a row of perforations in longitudinal direction, characterized in that the banderole strip is supplied by the banderole supply device substantially tensionless on top of the drive belt near the cheese outlet side, whereby the air surge chamber (26) near the cheese inlet side is placed beneath the drive belt such that, when an introduced cheese (11) is engaged by the suction cup (74), the banderole strip (12) is guided by the drive belt (7) near to the cheese inlet side, and its forepart is then struck by an air surge of the air surge chamber onto the cheese.

4. A device according to claims 2 or 3, characterized in that downstream of the suction cup (74) in the track direction there is provided a stop (60) the height of which can be adjusted such that in the upper position of the stop the upright cheese (11) can move beneath said stop to the cheese outlet side, and that adjusting means (73, 79, 69, 66, 61, 63) are provided to adjust both the suction cup as well as the stop to a height corresponding with the centre of the upright cheese.

5. A device according to one of the claims 2—5, characterized in that the cheese support surface of the drive belt (7) is slightly sloping downward from the inlet side to the outlet side such that, after stopping the driving means (17) and admitting air into the suction cup (74), the cheese (11) rolls on to the outlet side.

6. A device according to claim 5, in which the banderole section (1) is further provided with a banderole severing means, characterized in that the severing means comprises a plate (24) positioned downstream of the suction cup (74) viewed in the track direction above the drive belt (7) such that the banderole strip (12) when the cheese rolls on, is severed by the severing edge of said plate.

7. A device according to claim 5, in which the banderole section (1) is further provided with a banderole perforation means, characterized in that the perforation means comprise a roll (19d) positioned near the banderole supply device, and having a perforation cam (19a) which cooperates with a roll (19b) positioned at the other side of the banderole strip (12) and being provided with grooves, the perforation action of which perforation means being adjustable to a determined length of the banderole strip.

8. A device according to claim 6, in which the banderole section (1) is further provided with an adhesive applying means, characterized in that the adhesive applying means (25) is positioned between the severing means (24) and the drive belt (7) and is set in operation such that when the drive belt is moving the banderole strip (12) present thereon is coated with adhesive.

9. A device according to one of the preceding claims, in which the banderole supply device is provided with a supply roll, characterized in that in the banderole supply device there are provided two band guides (22, 23) such that the banderole strip (12) is guided substantially tensionless from the supply roll (13) to the first band guide (22), from the latter downward to the second band guide, (23) and from said second band guide upward to the drive belt (7).

10. A device according to one of the preceding claims, characterized in that following the banderole section (1) an substantially U-shaped cheese reversal track (2) having guide means (30) to guide the cheese (11) from its upright position into a horizontal position, and that following the cheese reversal track a labelling section (3) in which on the cheese on its top side there is deposited a label, are provided such that a compact and movable unit comes about.

11. A device according to claim 10, characterized in that the labelling section (3) is provided with a substantially vertically positioned label holder (37) and a drive roller (41) near the lower side of the label holder to deposit a label already available in a starting position and then to seize the next label bringing it down in the starting position for the next cheese.



12. A device according to claim 11, characterized in that the labelling section (3) is provided with a measuring wheel (83) positioned near the upper side of the label holder (37) to provide timing pulses for driving the drive roller.

**Patentansprüche**

1. Anlage zum Identifizieren von Käse durch Anbringen von bedrucktem Material auf dem Käse (11) in einem Bewegungsablauf, umfassend einen Banderolierabschnitt (1) mit einem Förderer (7, 8, 9), der den Käse dreht, und einer Banderolenzuführvorrichtung (19, 22, 23, 21) zur Zuführung einer Banderole zum Umfang des rotierenden Käses, dadurch gekennzeichnet, daß die Anlage eine Käsekontaktiervorrichtung (10, 74) aufweist, die den aufrecht stehenden Käse (11) in dessen Mittenabschnitt wenigstens auf einer Seite kontaktiert, und daß der Förderer (7, 8, 9) mit der Käsekontaktiervorrichtung so zusammenwirkt, daß der Käse während seiner Drehung in einer Vertikalebene um seine im wesentlichen ortsfeste Mittenachse mit der Banderole umwickelt wird.

2. Anlage nach Anspruch 1, wobei der Banderolierabschnitt (1) mit einem Antrieb (17) ausgebildet ist, für die Banderolenzuführvorrichtung und den Förderer der einen Treibriemen (7) aufweist, dadurch gekennzeichnet, daß der Treibriemen (7) außerdem als Käseauflagefläche dient und in eine Richtung entgegengesetzt zur Käselaufbahn antreibbar ist, und daß die Käsekontaktiervorrichtung einen drehbaren Saugnapf (74), dessen Höhe einstellbar ist, und eine mit dem Saugnapf verbundene Unterdruckversorgung aufweist, so daß nach dem Einbringen des Käses in dem Saugnapf ein Unterdruck erzeugt wird.

3. Anlage nach Anspruch 2, wobei der Banderolierabschnitt (1) ferner eine Luftstrahlkammer (26) nahe dem Treibriemen aufweist, der eine Reihe Perforationen in Länsrichtung hat, dadurch gekennzeichnet, daß der Banderolenstreifen von der Banderolenzuführvorrichtung im wesentlichen spannungslos über der Oberfläche des Treibriemens nahe der Käseaustrittsseite zugeführt wird, wobei die Luftstrahlkammer (26) nahe der Käseeintrittsseite unter den Treibriemen angeordnet ist, so daß bei Kontaktierung eines eingeführten Käses (11) durch den Saugnapf (74) der Banderolenstreifen (12) vom Treibriemen (7) nahe zur Käseeintrittsseite geführt und sein Vorderabschnitt dann von einem Luftstrahl aus der Luftstrahlkammer auf den Käse gedrückt wird.

4. Anlage nach Anspruch 2 oder 3, dadurch gekennzeichnet, daß abstrom vom Saugnapf (74) in Laufrichtung ein Anschlag (60) vorgesehen ist, der höhenverstellbar ist, so daß in der oberen Lage des Anschlags der aufrecht stehende Käse (11) sich unter dem Anschlag zur Käseaustrittsseite bewegen kann, und daß Einstellmittel (73, 79, 69, 66, 61, 63) vorgesehen sind, die sowohl den Saugnapf als auch den Anschlag auf eine der Mitte des aufrecht stehenden Käses entsprechende Höhe einstellen.

5. Anlage nach einem der Ansprüche 2—4, dadurch gekennzeichnet, daß die Käseauflagefläche des Treibriemens (7) von der Eintritts- zur Austrittsseite leicht abwärts geneigt ist, so daß nach dem Anhalten des Antriebs (17) und dem Eintritt von Luft in den Saugnapf (74) der Käse (11) zur Austrittsseite rollt.

6. Anlage nach Anspruch 5, wobei der Banderolierabschnitt (1) ferner eine Banderolentrennvorrichtung aufweist, dadurch gekennzeichnet, daß die Trennvorrichtung eine Platte (24) umfaßt, die abstrom vom Saugnapf (74) über dem Treibriemen (7), in Laufrichtung gesehen, positioniert ist, so daß der Banderolenstreifen (12) beim Weiterrollen des Käses von der Schneidkante der Platte durchtrennt wird.

7. Anlage nach Anspruch 5, wobei der Banderolierabschnitt (1) ferner eine Banderolenperforationsvorrichtung aufweist, dadurch gekennzeichnet, daß die Perforationsvorrichtung eine Rolle (19d) umfaßt, die nahe der Banderolenzuführvorrichtung angeordnet ist und einen Perforationsnocken (19a) trägt, der mit einer auf der anderen Seite des Banderolenstreifens (12) angeordneten, Nuten aufweisenden Rolle (19b) zusammenwirkt, wobei der Perforationsvorgang der Perforationsvorrichtung auf eine bestimmte Länge des Banderolenstreifens einstellbar ist.

8. Anlage nach Anspruch 6, wobei der Banderolierabschnitt (1) ferner eine Kleberaufbringvorrichtung aufweist, dadurch gekennzeichnet, daß die Kleberaufbringvorrichtung (25) zwischen der Trennvorrichtung (24) und dem Treibriemen (7) liegt und im Betrieb so eingestellt ist, daß bei laufendem Treibriemen der darauf befindliche Banderolenstreifen (12) mit Kleber beschichtet wird.

9. Anlage nach einem der vorhergehenden Ansprüche, wobei die Banderolenzuführvorrichtung eine zuführrolle aufweist, dadurch gekennzeichnet, daß in der Banderolenzuführvorrichtung zwei Bandführungen (22, 23) so vorgesehen sind, daß der Banderolenstreifen (12) im wesentlichen spannungslos von der zuführrolle (13) zur ersten Bandführung (22), von dieser abwärts zur zweiten Bandführung (23) und von dieser aufwärts zum Treibriemen (7) geführt wird.

10. Anlage nach einem der vorhergehenden Ansprüche, dadurch gekennzeichnet, daß nach dem Banderolierabschnitt (1) eine im wesentlichen U-förmige Käseumsteuerbahn (2) mit Führungen (30) zum Führen des Käses (11) aus seiner aufrechten Lage in eine Horizontallage und nach der Käseumsteuerbahn ein Etikettierabschnitt (3), in dem auf der Oberseite des Käses ein Etikett angebracht wird, so vorgesehen sind, daß eine kompakte und bewegliche Einheit gebildet ist.

11. Anlage nach Anspruch 10, dadurch gekennzeichnet, daß der Etikettierabschnitt (3) einen im wesentlichen vertikal angeordneten Etikettenhalter (37) und eine Antriebsrolle (41) nahe der Unterseite des Etikettenhalters aufweist, so daß ein bereits in einer Ausgangslage verfügbares Etikett aufgebracht und anschließend das nächste Etikett ergriffen und nach unten in die Ausgangslage für den nächsten Käse gebracht wird.

12. Anlage nach Anspruch 11, dadurch gekennzeichnet, daß der Etikettierabschnitt (3) ein Meßrad (83) nahe der Oberseite des Etikettenhalters (37) aufweist, das Taktimpulse zum Antreiben der Antriebsrolle erzeugt.

**Revendications**

1. Dispositif pour identifier les fromages en appliquant des matières imprimées sur le fromage (11) en un seul passage, comportant une section de bande d'inscription (1) qui comprend un transporteur (7, 8, 9) pour faire tourner le fromage et un dispositif d'amenée de la bande d'inscription (19, 22, 23, 21) pour amener une bande d'inscription sur la circonférence du fromage qui tourne, caractérisé en ce que le dispositif est muni de moyens (10, 74) de prise du fromage pour venir en prise avec le fromage (11) en position verticale, dans sa portion centrale, au moins d'un côté, et en ce quue le transporteur (7, 8, 9) coopère avec les moyens de prise du fromage de façon qu'au cours de sa rotation dans un plan vertical autour de son axe sensiblement fixe, le fromage s'enroule dans la bande d'inscription.

2. Dispositif selon la revendication 1, dans lequel la section de la bande d'inscription (1) comporte un moyen d'entraînement (17) pour le dispositif d'amenée de la bande d'inscription et pour le transporteur qui comprend un tapis d'entraînement (7), caractérisé en ce que le tapis d'entraînement (7) fonctionne également comme surface support du fromage sensiblement horizontale et en ce qu'il est prévu pour être entraîné dans le sens opposé au sens du trajet du fromage, et en ce que le moyen de prise du fromage comporte une coupelle ventouse (74) dont la hauteur est réglable et une source de vide couplée à la coupelle ventouse de façon qu'après introduction du fromage on amène le vide dans la coupelle ventouse.

3. Dispositif selon la revendication 2, dans lequel la section de la bande d'inscription (1) comporte en outre une chambre de décharge d'air (26), près du tapis d'entraînement qui présente une rangée de perforations dans sa direction longitudinale, caractérisé en ce que la bande d'inscription est amenée par le dispositif d'amenée de la bande d'inscription sensiblement sans tension sur le dessus du tapis d'entraînement près du côté sortie du fromage, la chambre de décharge d'air (26) près du côté entrée du fromage étant placée sous le tapid d'entraînement de façon que, lorsqu'un fromage introduit (11) est pris par la coupelle ventouse (74), la bande d'inscription (12) est guidée par le tapis d'entraînement (7) près du côté entrée du fromage et que sa partie avant est alors envoyée contre le fromage par une décharge d'air de la part de la chambre de décharge d'air.

4. Dispositif selon la revendication 2 ou 3, caractérisé en ce qu'en aval de la coupelle ventouse (74), dans la direction du trajet, est prévue une butée (60) dont on peut régler la hauteur de façon que, dans la position haute de la butée, le fromage (11), placé verticalement, peut passer sous ladite butée pour venir côté sortie du fromage, et en ce que des moyens de réglage (73, 79, 69, 66, 61, 63) sont prévus pour régler aussi bien la coupelle ventouse que la butée à une hauteur correspondant au centre du fromage placé verticalement.

5. Dispositif selon l'une des revendications 2 à 4, caractérisé en ce que la surface support du fromage du tapis d'entraînement (7) est légèrement en pente descendante en allant du côté entrée au côté sortie de sorte qu'après l'arrêt du moyen d'entraînement (17) et l'admission de l'air dans la coupelle ventouse (74), le fromage (11) roule vers le côté sortie.

6. Dispositif selon la revendication 5, dans lequel la section de la bande d'inscription (1) comporte en outre un moyen de coupe de la bande d'inscription, caractérisé en ce que le moyen de coupe comporte une plaque (24) placée en aval de la coupelle ventouse (74), vu dans la direction du trajet, au-dessus du tapis d'entraînement (7), de façon que, lorsque le fromage roule sur cette plaque, la bande d'inscription (12) est coupée par le bord de coupe de ladite plaque.

7. Dispositif selon la revendication 5, dans lequel la section de la bande d'inscription (1) comporte en outre un moyen de perforation de la bande d'inscription, caractérisé en ce que le moyen de perforation comporte un rouleau (19d) placé près du dispositif d'amenée de la bande d'inscription et ayant une came à perforation (19a) qui collabore avec un rouleau (19b) placé de l'autre côté de la bande d'inscription (12) et pourvu de rainures, l'action de perforation de ce moyen de perforation étant réglable á une longueuer déterminé de la bande d'inscription.

8. Dispositif selon la revendication 6, dans lequel la section de la bande d'inscription (1) comporte en outre un moyen d'application de l'adhésif, caractérisé en ce que le moyen d'application de l'adhésif (25) est placé entre le moyen de coupe (24) et le tapis d'entraînement (7) et qu'il est réglé pour fonctionner de façon que, lorsque le tapis d'entraînement est en marche, la bande d'inscription (12) qui s'y trouve soit revêtue d'adhésif.

9. Dispositif selon l'une · des revendications précédentes, dans lequel le dispositif d'amenée de la bande d'inscription comporte un rouleau d'amenée, caractérisé en ce que dans le dispositif d'amenée de la bande d'inscription sont prévus deux guides de bande (22, 23) tels que la bande d'inscription (12) est guidée sensiblement sans tension pour passer du rouleau d'amenée (13) au premier guide de bande (22), de ce dernier, vers le bas, au second guide de bande (23), et du dit second guide de bande, vers le haut, au tapis d'entraînement (7).

10. Dispositif selon l'une des revendications précédentes, caractérisé en ce qu'à la suite de la section de la bande d'inscription (1) est prévue une piste de renversement du fromage (2) sensiblement en forme de U, présentant un moyen de guidage (30) pour guider le fromage (11) de sa position verticale à sa position horizontale, et en ce qu'à la suite de la piste de renversement du fromage est prévue une section d'étiquetage (3) sur laquelle une étiquette est déposée sur le fromage, sur sa face supérieure, de façon que l'on obtient un ensemble compact et mobile.

11. Dispositif selon la revendication 10, caractérisé en ce que la section d'étiquetage (3) comporte un porte-étiquettes (37) placé sensiblement verticalement et un rouleau d'entraînement (41) près du côté inférieur du porte-étiquettes pour déposer une étiquette qui se présente déjà en position de départ et ensuite pour saisir l'étiquette suivante et l'amener en position de départ pour le fromage suivant.

12. Dispositif selon la revendication 11, caractérisé en ce que la section d'étiquetage (3) comporte une roue de mesure (83) placée près du côté supérieur du porte-étiquettes (37) pour fournir des impulsions chronométriques pour entraîner le rouleau d'entraînement.

0 132 862

fig-1

fig-2

fig-3

fig-4